# FASCICULE DE BREVET EUROPEEN

(11) **EP 3 601 909 B1**
(45) Date de publication et mention de la délivrance du brevet: **21.04.2021**
(21) Numéro de dépôt: 18722674.1
(22) Date de dépôt: 30.03.2018
(51) Int. Cl.: F25D 3/12, B01F 11/00, B02C 17/18, G01N 1/28, B01F 13/00, F25D 17/06

(54) **DISPOSITIF DE REFROIDISSEMENT**
KÜHLGERÄT
COOLING DEVICE

(30) Priorité: 31.03.2017 FR 1752810
(43) Date de publication de la demande: 05.02.2020
(73) Titulaire: Bertin Technologies, 78180 Montigny-le-Bretonneux (FR)
(72) Inventeur: KUNC, Thierry, 78000 Versailles (FR); FOURNEL, Guillaume, 78000 Versailles (FR); DIAZ, Damien, 13480 Calas (FR)
(74) Mandataire: Decobert, Jean-Pascal
(86) Numéro de dépôt international: PCT/FR2018/050813
(87) Numéro de publication internationale: WO 2018/178602

(56) Documents cités:
- FR-A1- 2 903 026
- US-A1- 2005 016 199
- US-A1- 2014 302 485
- US-B1- 9 303 912
- Bertin Technologies: "User Manual CRYOLYS", , 31 décembre 2007 (2007-12-31), XP055415316, Extrait de l'Internet: URL:https://www.bertin-instruments.com/wp- content/uploads/secured-file/05068-800-DU0 02-A-Cryolys-User-Manual.pdf [extrait le 2017-10-12]

## Description

### DOMAINE

La présente invention concerne notamment le domaine des dispositifs de refroidissement, plus particulièrement pour appareils de broyage d'échantillons biologiques.

### CONTEXTE

On connait de la technique antérieure, par exemple des documents US 2005/016199 A1, US 2014/302485 A1, US 9 303 912 B1, FR 2 903 026 A1, et notamment du document EP2035146 des appareils de broyage d'échantillons comprenant essentiellement un plateau portant des tubes à échantillon à sa périphérie et monté en bout d'un arbre entrainé en mouvement oscillant autour d'un centre de rotation situé sur l'axe de l'arbre, par un moteur électrique au moyen d'un excentrique. Un capot pivotant est porté par une carrosserie fixe et vient recouvrir le plateau en vue du broyage des échantillons contenus dans le tubes.

Pour éviter que les échantillons contenus dans les tubes soient portés pendant leur broyage à une température élevée par des microbilles de verre, de céramique ou tout autre matière appropriée contenues dans les tubes, il est prévu de disposer des moyens de refroidissement autour de la zone d'oscillation des tubes. L'alimentation en froid est généralement réalisée par un raccordement des moyens de refroidissement à une conduite spécifique de ville qui fournit un air froid filtré et sans humidité. L'absence d'humidité dans l'air de refroidissement s'avère en effet être un facteur important pour éviter la formation de givre à l'intérieur de l'enceinte logeant les tubes. Toutefois, le raccordement à un réseau de froid peut s'avérer difficile voire impossible dans certaines localisations géographiques, ce qui empêche l'utilisation optimale du dispositif de broyage.

### RESUME DE L'INVENTION

A cet effet, il est proposé un dispositif, en particulier pour un appareil de broyage d'échantillons biologiques, comprenant une première enceinte comportant une chambre interne destinée à recevoir un matériau apte à produire du froid par sublimation dans des conditions normales de température et de pression et comprenant une ouverture permettant une communication fluidique avec une chambre interne d'une seconde enceinte au travers d'une ouverture de ladite seconde enceinte, le dispositif comprenant en outre un circuit d'air faisant communiquer l'air extérieur avec la chambre interne de la première enceinte, des moyens de soufflage permettant une circulation d'air dans le circuit d'air depuis l'extérieur jusque dans la chambre interne de la première enceinte. Il peut être prévu des moyens de mesure de la température dans la chambre de la seconde enceinte et il peut aussi être prévu des moyens de commande des moyens de soufflage d'air en fonction de la température dans la chambre de la seconde enceinte.

Ainsi, la première enceinte et la seconde enceinte sont reliées fluidiquement l'une à l'autre par des ouvertures et la commande du débit d'air alimentant la chambre de la première enceinte, c'est-à-dire destiné à venir au contact avec le matériau apte à produire du froid par sublimation, permet d'alimenter la chambre de la seconde enceinte avec un débit d'air froid commandé en fonction de la température dans celle-ci. La sublimation du matériau permet de réduire la pression partielle de saturation en eau de l'air froid alimentant la chambre de la seconde enceinte, ce qui permet de réduire la température de rosée dans la chambre de la seconde enceinte. Ainsi, le dispositif fonctionne en abaissant la température de rosée dans la chambre de la seconde enceinte puisque la température minimale admissible pour les parois de la seconde enceinte en contact avec l'air froid est abaissée, ces parois ne condensant pas la vapeur d'eau contenue dans l'air car leur température est supérieure à la température de rosée.

Plus spécifiquement, le matériau apte à produire du froid par sublimation peut être du CO2 sous la forme solide, plus spécifiquement de la carboglace.

Le terme « conditions normales de température et de pression » se réfère à une température et une pression ambiante d'utilisation du dispositif, dans un laboratoire notamment, la température étant voisine de 20°C et la pression voisine de la pression atmosphérique standard, de l'ordre de 1 atm, c'est-à-dire 1,01325 bar.

Le présent document concerne également un dispositif comprenant une première enceinte comportant une chambre interne destinée à recevoir un matériau apte à produire du froid par sublimation dans des conditions normales de température et de pression et comprenant une ouverture. Le dispositif peut comprendre en outre un circuit d'air faisant communiquer l'air extérieur avec la chambre interne de la première enceinte. Il peut aussi comprendre des moyens de soufflage permettant une circulation d'air dans le circuit d'air depuis l'extérieur jusque dans la chambre interne de la première enceinte.

Les caractéristiques qui suivent s'appliquent de manière indifférenciée aux dispositifs précédemment décrits. Ces dispositifs peuvent être qualifiés de dispositifs de refroidissement.

De préférence, l'ouverture de la première enceinte est par exemple apte à permettre une communication fluidique avec une chambre interne d'une seconde enceinte au travers d'une ouverture de ladite seconde enceinte.

Selon un autre aspect, le circuit d'air peut loger les moyens de soufflage d'air et peut comprendre une sortie débouchant dans une partie supérieure de la première enceinte.

Dans une réalisation particulière, le circuit d'air comprend un conduit amont dont une extrémité amont débouche dans l'air extérieur.

Dans une autre réalisation, une extrémité aval du conduit peut déboucher dans une cavité d'un couvercle à double parois, lequel couvercle peut comporter une paroi interne laquelle peut comprendre une pluralité de passages débouchant dans la chambre interne de la première enceinte. Cette configuration permet une répartition uniforme de l'air dans la chambre de la première enceinte assurant ainsi un contact uniforme de l'air avec le matériau apte à se sublimer.

Ledit conduit amont peut loger les moyens de soufflage d'air et peut être solidaire de la seconde enceinte. Les moyens de soufflage d'air peuvent encore être reliés à des moyens d'alimentation électrique également portés par la seconde enceinte. Ce type de configuration permet de concevoir la première enceinte sans contraintes liées à l'utilisation d'électricité puisque celle-ci ne comprend aucun organe électrique.

Dans une réalisation particulière, les moyens de soufflage d'air comprennent un ventilateur agencé à l'entrée du circuit d'air.

Une coupelle de réception dudit matériau est montée fixe ou amovible à l'intérieur de la chambre interne de la première enceinte et peut comprendre une paroi inférieure comportant une pluralité d'orifices, la coupelle étant positionnée à distance d'une paroi de fond de la première enceinte dans laquelle est formée ladite ouverture de la première enceinte. Cet agencement permet de maintenir le matériau apte à se sublimer à distance de la paroi de fond, afin de garantir une circulation d'air optimale de la première enceinte vers une autre enceinte, telle que la seconde enceinte par exemple, au travers du matériau apte à se sublimer.

Des moyens d'isolation thermique peuvent être agencés entre la coupelle et la paroi de fond de la première enceinte autour de l'ouverture de la première enceinte, de manière à assurer un confinement de l'air froid et limiter la conduction thermique vers l'extérieur de la première enceinte.

Dans une configuration plus particulière, la première enceinte est agencée, par exemple de manière amovible, au-dessus de la seconde enceinte et l'ouverture de la première enceinte peut être formée dans une paroi de fond ou inférieure de celle-ci, l'ouverture de la seconde enceinte pouvant par exemple être formée dans une paroi supérieure de la seconde enceinte.

Selon un autre aspect, les moyens de mesure de la température comprennent un capteur de température porté par une face interne de la seconde enceinte et de préférence à proximité de l'ouverture de la seconde enceinte.

Il peut être intéressant de disposer, dans la chambre interne de la seconde enceinte, un plateau de support de tubes destinés à contenir des échantillons biologiques, des moyens d'entrainement du plateau en mouvement oscillatoire autour d'un centre de rotation étant par exemple prévus. Le froid généré avec le dispositif et qui circule autour des tubes comprend un niveau d'humidité qui est suffisamment faible pour que la température de rosée puisse être abaissée en dessous de la température souhaitée dans la chambre interne de la seconde enceinte.

Avantageusement, la chambre de la seconde enceinte est reliée fluidiquement à l'air extérieur, ce qui permet de mettre la chambre à la pression extérieure. Ainsi, l'augmentation de la pression partielle du matériau apte à se sublimer tout en conservant la pression totale à la pression extérieure, permet d'abaisser la pression partielle de vapeur dans la chambre de la seconde enceinte.

Le présent document concerne également un procédé de mise en œuvre du dispositif tel que décrit précédemment, comprenant les étapes suivantes :
- Remplir la chambre interne de la première enceinte avec un matériau apte à produire du froid par sublimation dans des conditions normales de température et de pression, tel que du dioxyde de carbone sous forme solide,
- Déterminer une température cible à atteindre pour la chambre de la seconde enceinte,
- Mettre en fonctionnement le dispositif de manière à maintenir la température de la chambre de la seconde enceinte à la température cible en commandant le débit d'air alimentant la chambre de la première enceinte.

Avant le lancement du cycle de broyage par l'appareil de broyage d'échantillon, le soufflage d'air extérieur sur le dioxyde de carbone sous forme solide vers la chambre de la seconde enceinte permet la descente en température de celle-ci et l'abaissement de la température du point de rosée par introduction de CO₂ ce qui évite l'apparition de condensation ou de givre dans la chambre de la seconde enceinte en induisant une diminution forte de la pression de vapeur, la pression totale de la chambre de la seconde enceinte restant égale à celle atmosphérique de par des ouvertures sur l'extérieur.

Une fois la chambre de la seconde enceinte refroidie, le cycle de broyage débute. Le maintien de la température dans la chambre de la seconde enceinte au cours du cycle de broyage est garanti par le soufflage sur le dioxyde de carbone mais également par le brassage de l'air à l'intérieur de la seconde chambre par le plateau de support des tubes et par l'inertie thermique importante du plateau de support de tube lui-même, pièce métallique imposante.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'un dispositif de broyage d'échantillons biologiques sur lequel est monté un dispositif de refroidissement desdits échantillons biologiques ;
- la figure 2 est une vue schématique en coupe du dispositif selon l'invention ;
- la figure 3 est une vue schématique en perspective du dispositif de la figure 2, le couvercle n'étant pas représenté ;
- la figure 4 est une vue schématique en perspective et isolée d'une coupelle du dispositif de la figure 3 ;
- la figure 5 est une vue schématique en perspective du dispositif de la figure 3, la coupelle ayant été retirée ;
- la figure 6 est une vue schématique en perspective du dispositif de refroidissement en cours d'assemblage au dispositif de broyage d'échantillons biologiques ;
- la figure 7 est une vue schématique en perspective d'un dispositif selon l'invention depuis l'arrière ;
- la figure 8 est une vue schématique en perspective depuis le dessous de la première enceinte du dispositif de refroidissement selon l'invention ;
- la figure 9 est une vue schématique en perspective du couvercle du dispositif de refroidissement de la figure 2 ;
- la figure 10 est un graphe connue représentant l'évolution du point de rosée (en °C) en fonction de la température de l'air, pour plusieurs pourcentage d'humidité à une pression de 1 atm ;
- la figure 11 est un graphe de l'évolution de la pression de vapeur saturante de l'eau.

### DESCRIPTION DETAILLEE

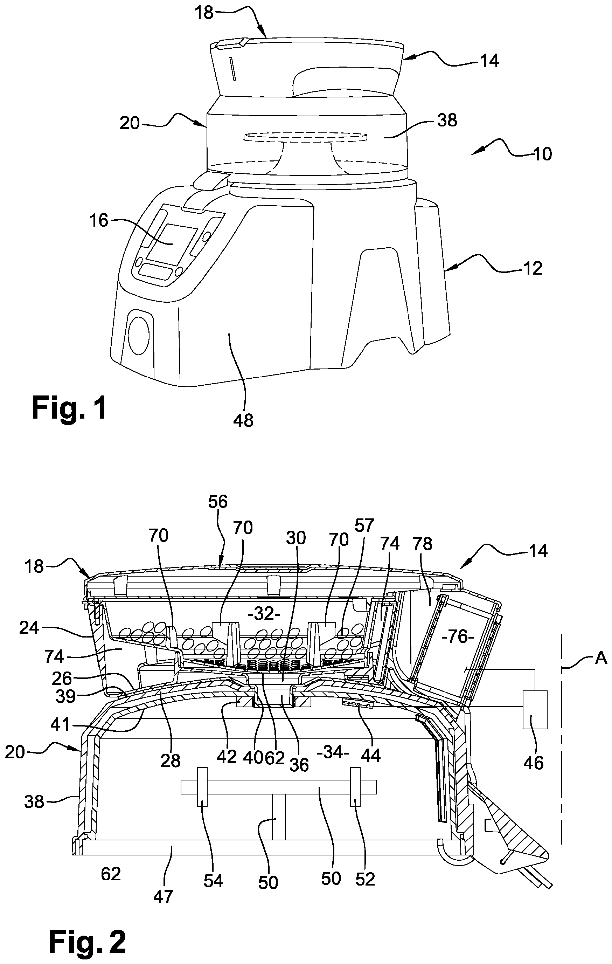

La figure 1 qui représente un ensemble 10 comprenant un dispositif de broyage d'échantillons 12 biologiques et un dispositif 14 de refroidissement agencé au-dessus du dispositif 12 de broyage d'échantillons. L'ensemble 10 comprend un panneau 16 de commande du dispositif de broyage d'échantillon 12 et du dispositif de production de froid 14.

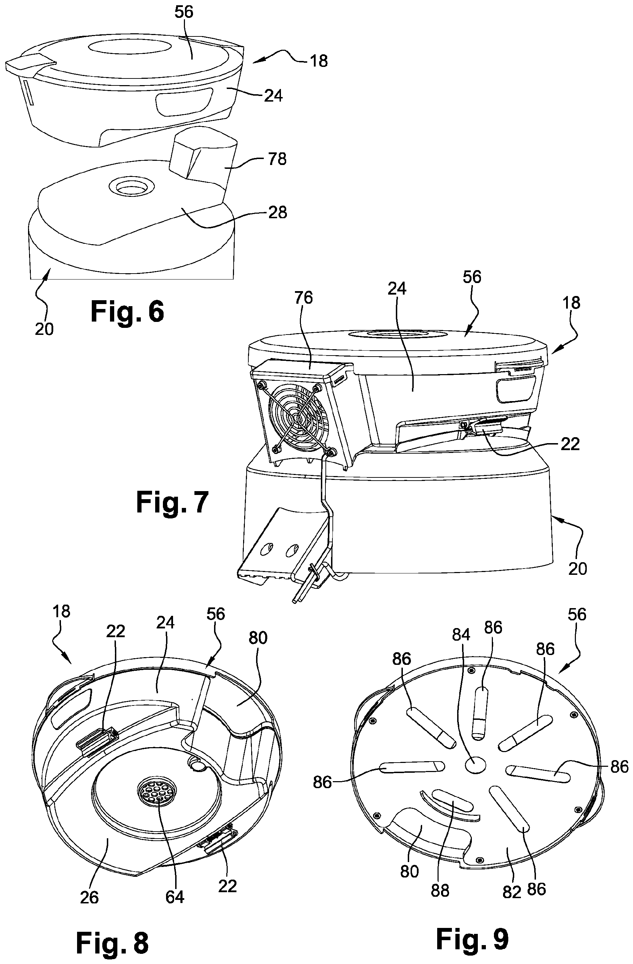

Le dispositif de production de froid 14 comprend une première enceinte 18 agencée au-dessus de la seconde enceinte 20 appartenant au dispositif de broyage d'échantillons 12. Comme cela est visible sur les figures 1 et 2, la première enceinte 18 ou enceinte supérieure est portée de manière amovible par une seconde enceinte 20 ou enceinte inférieure (figure 6). La première enceinte 18 peut être verrouillée en position de montage sur la seconde enceinte 20 au moyen d'organes de verrouillage 22 (figure 7).

La première enceinte 18 comprend une paroi annulaire latérale 24 s'étendant dans une direction verticale A et une paroi de fond 26 reliée au bord inférieur de la paroi annulaire latérale 24 et de forme sensiblement complémentaire d'une paroi supérieure 28 de la seconde enceinte 20 ou enceinte inférieure. La paroi de fond 26 ou paroi inférieure de l'enceinte supérieure 18 comprend une ouverture 30 de sortie établissant une communication fluidique entre une chambre interne 32 de l'enceinte supérieure 18 et une chambre interne 34 de l'enceinte inférieure 20 par l'intermédiaire d'une ouverture 36 d'entrée de la paroi supérieure 28 de l'enceinte inférieure 20. La paroi supérieure 28 de l'enceinte inférieure 20 est reliée sur son pourtour à une paroi annulaire latérale 38 s'étendant sensiblement dans la direction verticale A. Comme cela est visible sur la figure 2, la paroi inférieure 26 ou de fond de l'enceinte supérieure 18 est appliquée sur une pièce d'adaptation 39 permettant de réaliser un couplage de forme entre la première enceinte 18 et la seconde enceinte 20. Cette pièce d'adaptation 39 permet la solidarisation de l'enceinte supérieure 18 sur l'enceinte inférieure 20 par l'intermédiaire des organes de verrouillage 22. Cette pièce 39 peut comprendre une partie tubulaire centrale 40 qui est engagée dans l'ouverture 36 de l'enceinte inférieure 20 et qui reçoit un écrou 42 de serrage. On remarque que cet écrou 42 permet de serrer ensemble la paroi supérieure 28, une paroi supérieure 41 délimitant intérieurement la chambre 34 et la paroi 39. En pratique, on comprend que la seconde enceinte 20 est à double paroi. Egalement, on note que la chambre interne 34 de l'enceinte inférieure 20 comprend des moyens 44 de mesure de la température dans la chambre 34, lesquels moyens 44 de mesure de la température peuvent être un capteur du type numérique et sont portés par une face interne d'une paroi de l'enceinte 20 délimitant intérieurement la chambre 34 et sont agencés à proximité de l'ouverture 36 de l'enceinte inférieure 20. Les moyens de mesure 44 de la température sont reliés à des moyens de commande 46 d'un débit d'air d'alimentation de la chambre 32 de l'enceinte supérieure 18.

L'enceinte inférieure 20 est formée par un capot amovible et une partie 47 du châssis. Le capot amovible peut être monté pivotant sur le châssis 48 inférieur caréné de l'ensemble 10 (figure 1). L'enceinte inférieure 20 délimite une chambre interne 34 dans laquelle est agencé un plateau 50 portant des tubes 52 à échantillon à sa périphérie et monté en bout d'un arbre 54 entrainé en mouvement oscillant autour d'un centre de rotation situé sur l'axe de l'arbre 54. Un moteur électrique est logé à l'intérieur du châssis 48 caréné et permet l'entrainement à oscillation du plateau 50 et donc des tubes 52. En fonctionnement, le bord inférieur de la paroi latérale 38 de la seconde enceinte 20 20 ou enceinte inférieure est en appui sur le châssis 47 et recouvre ainsi le plateau 50 et les tubes 52 pour le broyage des échantillons contenus dans les tubes 52.

La première enceinte 18 ou enceinte supérieure comprend un couvercle pivotant 56 autour d'un axe sensiblement horizontal. La paroi annulaire externe 24, la paroi de fond 26 et le couvercle 56 définissent ensemble la chambre interne 32 dans laquelle est montée de manière amovible une coupelle 58 destinée à recevoir un matériau 57 apte à produire du froid par sublimation dans des conditions normales de température et de pression. Le matériau 57 apte à se sublimer est de préférence du CO₂ sous la forme solide ou carboglace qui présente l'avantage d'être facilement manipulable en laboratoire.

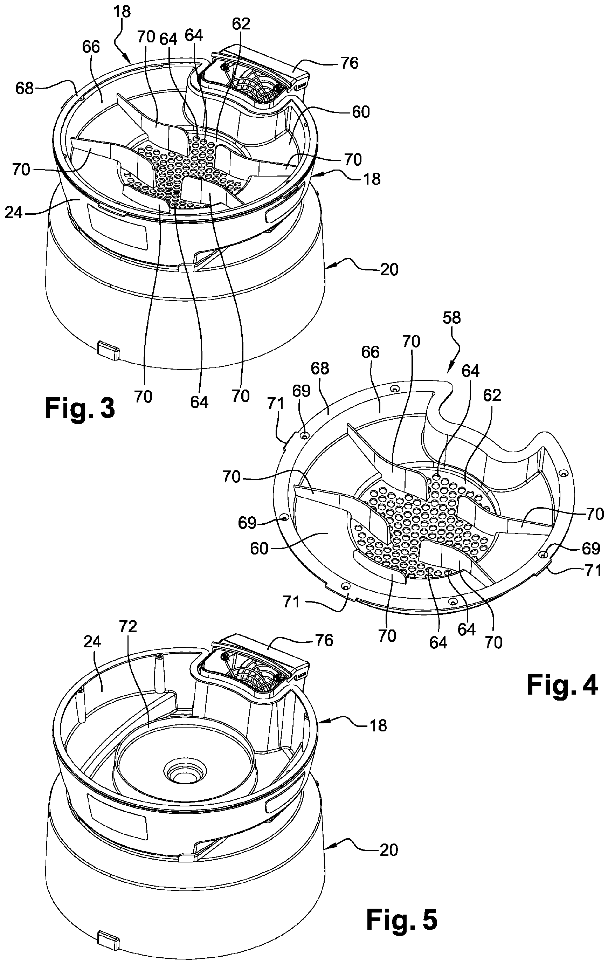

Comme représenté en figure 4, la coupelle 58 comprend une paroi annulaire tronconique 60 dont le bord annulaire interne est relié à une paroi arrondie 62 comprenant une face interne concave et une face externe convexe. Autrement dit, la convexité de la paroi incurvée 62 ou arrondie est tournée vers l'extérieur, c'est-à-dire vers la chambre interne 34 de la seconde enceinte. La paroi arrondie 62 ou paroi inférieure comprend une pluralité d'orifices 64. Le bord annulaire externe de la paroi annulaire tronconique 60 est relié à une paroi annulaire latérale 66 portant une collerette annulaire 68 destinée à venir en appui sur l'extrémité supérieure de la paroi latérale 24. La collerette annulaire 68 comprend des perçages pour le passage de vis de fixation de la collerette sur l'extrémité supérieure de la paroi latérale 24 de la première enceinte 18. La collerette 68 comprend également des ergots 71 répartis sur sa circonférence, dans le cas présent au nombre de trois. Ces ergots 71 permettent un clipsage d'organe de retenue portés par le couvercle 56.

Des ailettes 70 incurvées ou courbes sont formées à l'intérieur de la coupelle 58 et s'étendent depuis la paroi incurvée 62 jusqu'à la paroi annulaire latérale 66 de la coupelle 58. Ces ailettes 70 assurent un maintien du matériau 57 apte à se sublimer sensiblement uniformément répartis dans la coupelle 58 lors de la manipulation de celle-ci. La coupelle 58 est portée par des éléments 72 de structure formés en saillie depuis la paroi de fond 26 de la première enceinte 18 (figure 5).

Des moyens d'isolation thermique sont de préférence agencés entre la coupelle 58 et la paroi de fond 26 de la première enceinte 18 autour de l'ouverture 30 de la première enceinte 18 et entre la coupelle 58 et la paroi latérale 24, dans les logements intercalaires 74 afin de limiter les pertes caloriques par conduction du froid vers l'extérieur.

Afin d'établir une circulation d'air depuis l'extérieur jusque dans la chambre interne 32 de la première enceinte 18 enceinte supérieure, le dispositif selon l'invention comprend un circuit d'air ainsi que des moyens de soufflage 76 permettant d'établir le sens d'écoulement d'air souhaité (figures, 2, 3, 5 et 7).

Le circuit d'air d'alimentation en air de la chambre interne 32 de la première enceinte 18 est réalisé en deux parties, une partie amont formée par un conduit 78 solidaire de l'enceinte inférieure 20 et plus particulièrement de la paroi supérieure 28 de l'enceinte inférieure 20 et une partie aval formée par le couvercle 56. Le conduit amont 78 loge les moyens de soufflage 76 au voisinage de son extrémité amont débouchant dans l'air extérieur. On notera que les moyens de soufflage 76 d'air sont ainsi portés par l'enceinte inférieure 20 et que leur alimentation électrique peut ainsi être réalisée par l'intermédiaire des moyens d'alimentation électrique du dispositif 12 de broyage d'échantillons. Ainsi, l'enceinte supérieure 18, qui est optionnelle au fonctionnement du dispositif 12 de broyage, peut être conçue sans organe ou élément de connexion électrique, ce qui simplifie grandement sa fabrication.

Comme représenté aux figures 6 et 7, le conduit 78 de l'enceinte inférieure 20 est formé sur le pourtour de la paroi supérieure 28 de l'enceinte 20 et à une forme sensiblement complémentaire à celle d'un renfoncement de la paroi annulaire latérale 24 de l'enceinte supérieure 18. L'extrémité aval du conduit 78 est engagée dans une ouverture du couvercle 56 afin d'établir une communication d'air entre l'air extérieur et une cavité du couvercle 56 (figures 8 et 9). Cette cavité du couvercle 56 est délimitée entre une paroi externe 80 et une paroi interne 82, la paroi interne comprenant un premier passage central 84 qui est circulaire et des seconds passages 86 de forme oblongue dont la plus grande dimension s'étend sensiblement radialement par rapport au premier passage 84. Un troisième passage 88 est formé entre l'ouverture ou décrochement de la paroi interne 82 du couvercle 56 et le premier passage 84. Comme cela est visible le couvercle 56 peut présenter une forme sensiblement circulaire.

La circulation d'air s'effectue de la manière suivante. Les moyens de soufflage 76 impulsent un sens de circulation d'air dans le conduit amont 78 jusque dans la cavité du couvercle 56. L'air traverse ensuite les passages de la paroi interne du couvercle 56, l'air circulant ensuite au contact du matériau 57 apte à se sublimer logé dans la coupelle 58 qui est montée dans la chambre de l'enceinte supérieure. Au contact de l'air, le matériau 57 se sublime plus ou moins en fonction du débit d'air entrant dans la chambre interne 32. L'air froid issu de la sublimation du matériau 57 circule ensuite par les orifices 64 de la coupelle 58 dans l'ouverture 30 de l'enceinte supérieure 18 et dans l'ouverture 36 de la seconde enceinte 20 jusque dans la chambre 34 afin d'y refroidir les tubes lorsque ceux-ci sont soumis à une action de broyage des échantillons logés dans les tubes 52.

Afin de réaliser une alimentation en air froid optimale de la chambre 32 de l'enceinte supérieure 18, les moyens de soufflage 76 sont commandés par des moyens de commande 46 permettant de commander le débit d'air extérieur impulsé dans le circuit d'air en fonction de la température dans la chambre 34 de l'enceinte inférieure 18. La commande du ventilateur peut être effectuée avec une commande du type PWM qui désigne l'acronyme anglais de « pulse width modulation » pour modulation à largeur d'impulsion.

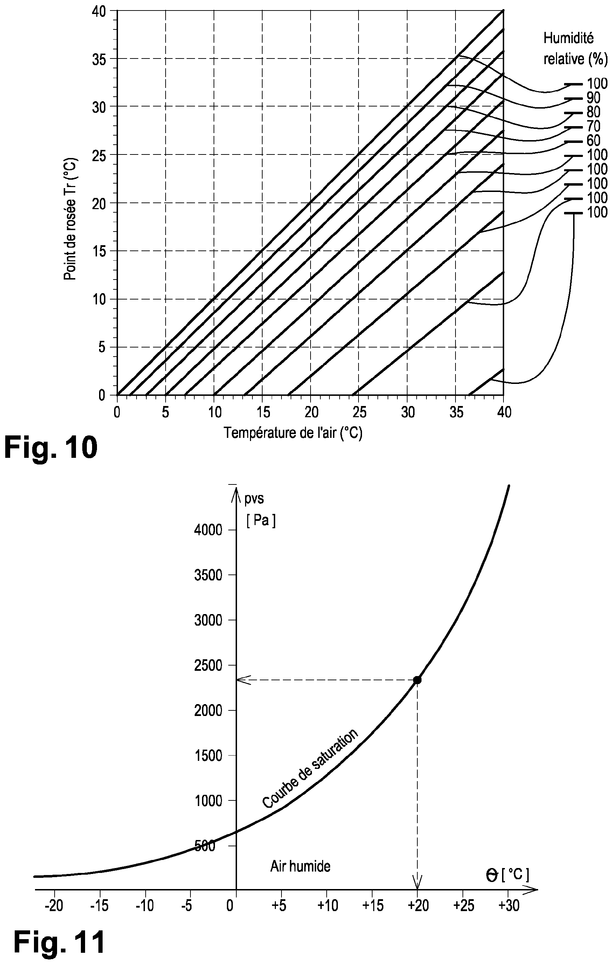

Dans un exemple pratique d'utilisation du dispositif selon l'invention dans des conditions standards de laboratoire : température de l'air extérieur d'environ 20°C comprenant un taux d'humidité de 50%, conduisant à une température de rosée de +10°C, la sublimation du CO₂ solide produit deux fois plus de CO₂ gazeux que d'air en transite. Ainsi, dans le mélange air/CO₂ obtenu, la dilution de la vapeur d'eau provoque la chute de sa pression partielle de saturation pour atteindre une température de rosée de -10°C (figure 10). La figure 11 permet également de comprendre que la chute de la pression partielle de vapeur d'eau dans la chambre 34 de la seconde enceinte 20 permet d'abaisser la température de rosée.

On notera l'amenée d'air dans la chambre 34 de l'enceinte supérieure 20 n'induit pas de surpression notable dans cette chambre 34 du fait que l'augmentation de pression générée par les moyens de soufflage est faible et qu'il existe des orifices de sortie d'air vers l'extérieur dont les dimensions sont suffisantes à l'évacuation de l'air vers l'air extérieur et au maintien de la pression totale dans la chambre 34 à la pression extérieure. Ainsi, de par la conception non fermée de la chambre 34 et du faible débit des moyens de soufflage, la pression dans la chambre 34 est toujours égale à la pression extérieure, c'est-à-dire la pression atmosphérique, 1013 mbar à l'intérieur de la chambre, ce qui permet de diminuer la température du point de rosée lors de l'ajout de CO2 par sublimation de la carboglace.

En effet la sublimation de la carboglace produit une certaine quantité de CO2 dans la seconde chambre qui dilue fortement la pression de vapeur à l'intérieur de celle-ci et donc la pression de saturation responsable de la condensation et du givre. Comme la seconde chambre n'est pas fermée hermétiquement nous avons toujours dans celle-ci : Patm = Pair + Pvap = 1013 mbar ou Pvap = Psat x HR (Humidité Relative).

Avec la sublimation de la carboglace nous avons : Patm = Pair + Pvap + Pco2 = 1013 mbar.

Ainsi la pression de vapeur va fortement chuter par exemple jusqu'à 1 mbar, d'où une pression de saturation très faible, par exemple de 200 Pa pour une ambiance laboratoire avec une humidité relative de 50% et un point de rosée négatif.

Si l'invention est particulièrement intéressante dans une configuration dans laquelle la première enceinte est agencée au-dessus de la seconde enceinte, pour avoir une bonne compacité du dispositif et un écoulement de l'air froid depuis le haut vers le bas, on comprend que l'invention peut fonctionner avec une première enceinte et seconde enceinte agencées relativement l'une à l'autre dans l'espace de manière différente et par exemple cote à cote. L'invention couvre également des réalisations dans lesquelles l'ouverture de sortie 30 et l'ouverture d'entrée 36 sont reliées l'une à l'autre par un conduit souple ou rigide, de manière générale par tout moyen permettant d'établir un écoulement d'air froid entre la chambre 32 de la première enceinte 18 et la chambre 34 de la seconde enceinte 20.

## Revendications

1. Dispositif, en particulier pour un appareil de broyage d'échantillons biologiques, comprenant une première enceinte (18) comportant une chambre interne (32) destinée à recevoir un matériau (57) apte à produire du froid par sublimation dans des conditions normales de température et de pression et comprenant une ouverture (30) permettant une communication fluidique avec une chambre interne d'une seconde enceinte (20) au travers d'une ouverture (36) de ladite seconde enceinte (20), le dispositif comprenant en outre un circuit d'air faisant communiquer l'air extérieur avec la chambre interne (32) de la première enceinte (18), des moyens de soufflage (76) permettant une circulation d'air dans le circuit d'air depuis l'extérieur jusque dans la chambre interne (32) de la première enceinte (18) ainsi que des moyens (44) de mesure de la température dans la chambre de la seconde enceinte (20) et des moyens de commande (46) des moyens de soufflage (76) d'air en fonction de la température dans la chambre de la seconde enceinte (20), et dans lequel une coupelle (58) de réception dudit matériau (57) est montée fixe ou amovible à l'intérieur de la chambre interne (32) de la première enceinte (18) et comprend une paroi inférieure (26) comportant une pluralité d'orifices (64), la coupelle (58) étant positionnée à distance d'une paroi de fond (26) de la première enceinte (18) dans laquelle est formée l'ouverture (30) de la première enceinte (18).

2. Dispositif selon la revendication 1, dans lequel le circuit d'air loge les moyens (76) de soufflage d'air et comprend une sortie débouchant dans une partie supérieure de la première enceinte (18).

3. Dispositif selon la revendication 1 ou 2, dans lequel le circuit d'air comprend un conduit amont (78) dont une extrémité amont débouche dans l'air extérieur.

4. Dispositif selon la revendication 3, dans lequel une extrémité aval du conduit amont (78) débouche dans une cavité d'un couvercle (56) à double parois dont une paroi interne (82) comprend une pluralité de passages (84, 86, 88) débouchant dans la chambre interne (32) de la première enceinte (18).

5. Dispositif selon la revendication 3 ou 4, dans lequel ledit conduit (78) amont loge les moyens (76) de soufflage d'air et est solidaire de la seconde enceinte (20), les moyens (76) de soufflage d'air étant reliés à des moyens d'alimentation électrique également portés par la seconde enceinte (20).

6. Dispositif selon l'une des revendications précédentes, dans lequel les moyens (76) de soufflage d'air comprennent un ventilateur agencé à l'entrée du circuit d'air.

7. Dispositif selon l'une des revendications précédentes, dans lequel des moyens d'isolation thermique sont agencés entre la coupelle (58) et la paroi de fond (26) de la première enceinte (18) autour de l'ouverture (30) de la première enceinte (18).

8. Dispositif selon l'une des revendications 1 à 7, dans lequel la première enceinte (18) est agencée au-dessus de la seconde enceinte (20) et l'ouverture de la première enceinte (18) est formée dans la paroi de fond (26) de la première enceinte (18) et en ce que l'ouverture (36) de la seconde enceinte (20) est formée dans une paroi supérieure (28) de la seconde enceinte (20).

9. Dispositif selon la revendication 8, dans lequel la première enceinte (18) est montée de manière amovible sur la seconde enceinte (20).

10. Dispositif selon l'une des revendications précédentes, dans lequel les moyens (44) de mesure de la température comprennent un capteur de température porté par une face interne de la seconde enceinte (20) et à proximité de l'ouverture (36) de la seconde enceinte (20).

11. Dispositif selon l'une des revendications précédentes, dans lequel un plateau (50) de support de tubes (52) destinés à contenir des échantillons biologiques est agencé à l'intérieur de la chambre de la seconde enceinte (20), des moyens d'entrainement du plateau (50) en mouvement oscillatoire autour d'un centre de rotation étant également prévus.

12. Dispositif selon l'une des revendications précédentes, dans laquelle la chambre (34) de la seconde enceinte (20) est reliée fluidiquement à l'air extérieur.

13. Procédé de mise en œuvre du dispositif selon l'une des revendications précédentes, comprenant les étapes suivantes :
- Remplir la chambre interne (32) de la première enceinte (18) avec un matériau (57) apte à produire du froid par sublimation dans des conditions normales de température et de pression, tel que du dioxyde de carbone sous forme solide, l'étape de remplissage de la chambre interne (32) comprenant le montage d'une coupelle (58) de réception dudit matériau (57) à l'intérieur de la chambre interne (32) de la première enceinte (18), la coupelle comprenant une paroi inférieure (26) comportant une pluralité d'orifices (64), et étant positionnée à distance d'une paroi de fond (26) de la première enceinte (18) dans laquelle est formée l'ouverture (30) de la première enceinte (18) ;
- Déterminer une température cible à atteindre pour la chambre (34) de la seconde enceinte (20),
- Mettre en fonctionnement le dispositif de manière à maintenir la température de la chambre (34) de la seconde enceinte (20) à la température cible en commandant le débit d'air alimentant la chambre (32) de la première enceinte (18).

## Patentansprüche

1. Vorrichtung, insbesondere für ein Gerät zum Zerkleinern von biologischen Proben, umfassend eine erste Umwandung (18), die eine Innenkammer (32) umfasst, die dazu bestimmt ist, ein Material (57) aufzunehmen, das geeignet ist, Kälte durch Sublimation unter normalen Temperatur- und Druckbedingungen zu erzeugen, und die eine Öffnung (30) umfasst, die eine Fluidkommunikation mit einer Innenkammer einer zweiten Umwandung (20) durch eine Öffnung (36) der zweiten Umwandung (20) ermöglicht, wobei die Vorrichtung weiter einen Luftkreislauf umfasst, der die Außenluft mit der Innenkammer (32) der ersten Umwandung (18) kommunizieren lässt, Gebläsemittel (76), die eine Luftzirkulation in dem Luftkreislauf von außerhalb bis in die Innenkammer (32) der ersten Umwandung (18) ermöglichen, sowie Mittel (44) zum Messen der Temperatur in der Kammer der zweiten Umwandung (20) und Mittel zum Steuern (46) der Luftgebläsemittel (76) in Abhängigkeit von der Temperatur in der Kammer der zweiten Umwandung (20), und wobei eine Schale (58) zur Aufnahme des Materials (57) festsitzend oder abnehmbar im Inneren der Innenkammer (32) der ersten Umwandung (18) angebracht ist und eine untere Wand (26) umfasst, die eine Vielzahl von Löchern (64) umfasst, wobei die Schale (58) entfernt von einer Bodenwand (26) der ersten Umwandung (18) positioniert ist, in der die Öffnung (30) der ersten Umwandung (18) gebildet ist.

2. Vorrichtung nach Anspruch 1, wobei der Luftkreislauf Luftgebläsemittel (76) beherbergt und einen Ausgang umfasst, der in einen oberen Teil der ersten Umwandung (18) mündet.

3. Vorrichtung nach Anspruch 1 oder 2, wobei der Luftkreislauf einen stromaufwärtigen Kanal (78) umfasst, von dem ein stromaufwärtiges Ende in die Außenluft mündet.

4. Vorrichtung nach Anspruch 3, wobei ein stromabwärtiges Ende des stromaufwärtigen Kanals (78) in einen Hohlraum eines doppelwandigen Deckels (56) mündet, von dem eine Innenwand (82) ein Vielzahl von Durchlässen (84, 86, 88) umfasst, die in die Innenkammer (32) der ersten Umwandung (18) münden.

5. Vorrichtung nach Anspruch 3 oder 4, wobei der stromaufwärtige Kanal (78) die Luftgebläsemittel (76) beherbergt und fest mit der zweiten Umwandung (20) verbunden ist, wobei die Luftgebläsemittel (76) mit Stromversorgungsmitteln verbunden sind, die ebenfalls von der zweiten Umwandung (20) getragen werden.

6. Vorrichtung nach einem der vorstehenden Ansprüche, wobei die Luftgebläsemittel (76) einen Lüfter umfassen, der am Eingang des Luftkreislaufes angeordnet ist.

7. Vorrichtung nach einem der vorstehenden Ansprüche, wobei Wärmeisolationsmittel zwischen der Schale (58) und der Bodenwand (26) der ersten Umwandung (18) rund um die Öffnung (30) der ersten Umwandung (18) angeordnet sind.

8. Vorrichtung nach einem der Ansprüche 1 bis 7, wobei die erste Umwandung (18) über der zweiten Umwandung (20) angeordnet ist und die Öffnung der ersten Umwandung (18) in der Bodenwand (26) der ersten Umwandung (18) gebildet ist und wobei die Öffnung (36) der zweiten Umwandung (20) in einer oberen Wand (28) der zweiten Umwandung (20) gebildet ist.

9. Vorrichtung nach Anspruch 8, wobei die erste Umwandung (18) abnehmbar auf der zweiten Umwandung (20) angebracht ist.

10. Vorrichtung nach einem der vorstehenden Ansprüche, wobei die Mittel (44) zum Messen der Temperatur einen Temperaturfühler umfassen, der von einer Innenfläche der zweiten Umwandung (20) und in der Nähe der Öffnung (36) der zweiten Umwandung (20) getragen wird.

11. Vorrichtung nach einem der vorstehenden Ansprüche, wobei eine Platte (50) zum Tragen von Röhren (52), die dazu bestimmt sind, biologische Proben zu enthalten, im Inneren der Kammer der zweiten Umwandung (20) angeordnet ist, wobei Mittel zum Antreiben der Platte (50) in eine Schwingbewegung rund um einen Drehpunkt ebenfalls vorgesehen sind.

12. Vorrichtung nach einem der vorstehenden Ansprüche, wobei sich die Kammer (34) der zweiten Umwandung (20) in Fluidverbindung mit der Außenluft befindet.

13. Verfahren zur Anwendung der Vorrichtung nach einem der vorstehenden Ansprüche, umfassend folgende Schritte:
- Füllen der Innenkammer (32) der ersten Umwandung (18) mit einem Material (57), das geeignet ist, Kälte durch Sublimation unter normalen Temperatur- und Druckbedingungen zu erzeugen, wie etwa Kohlendioxid in fester Form, wobei der Schritt des Füllens der Innenkammer (32) das Anbringen einer Schale (58) zur Aufnahme des Materials (57) im Inneren der Innenkammer (32) der ersten Umwandung (18) umfasst, wobei die Schale eine untere Wand (26) umfasst, die eine Vielzahl von Löchern (64) umfasst, und entfernt von einer Bodenwand (26) der ersten Umwandung (18) positioniert ist, in der die Öffnung (30) der ersten Umwandung (18) gebildet ist;
- Bestimmen einer zu erreichenden Solltemperatur für die Kammer (34) der zweiten Umwandung (20),
- Inbetriebsetzen der Vorrichtung, sodass die Temperatur der Kammer (34) der zweiten Umwandung (20) auf der Solltemperatur gehalten wird, indem der Luftdurchsatz, mit dem die Kammer (32) der ersten Umwandung (18) versorgt wird, gesteuert wird.

## Claims

1. Device, in particular for an apparatus for grinding biological samples, comprising a first enclosure (18) including an inner chamber (32) intended to receive a material (57) capable of producing cold by sublimation under normal temperature and pressure conditions and comprising an opening (30) that allows fluid communication with an inner chamber of a second enclosure (20) through an opening (36) of said second enclosure (20), the device further comprising an air circuit bringing the outside air into communication with the inner chamber (32) of the first enclosure (18), blowing means (76) allowing air to circulate in the air circuit from the outside into the inner chamber (32) of the first enclosure (18) as well as means (44) for measuring the temperature in the chamber of the second enclosure (20) and means for controlling (46) the blowing means (76) of air according to the temperature in the chamber of the second enclosure (20), and wherein a cup (58) for receiving said material (57) is mounted fixed or movable inside the inner chamber (32) of the first enclosure (18) and comprises a lower wall (26) including a plurality of orifices (64), the cup (58) being positioned at a distance from a bottom wall (26) of the first enclosure (18) wherein the opening (30) of the first enclosure (18) is formed.

2. Device according to claim 1, wherein the air circuit houses the means (76) for blowing air and comprises an outlet opening into an upper portion of the first enclosure (18).

3. Device according to claim 1 or 2, wherein the air circuit comprises an upstream duct (78) of which an upstream end opens into the outside air.

4. Device according to claim 3, wherein a downstream end of the upstream duct (78) opens into a cavity of a double-wall lid (56) of which an inner wall (82) comprises a plurality of passages (84, 86, 88) that open into the inner chamber (32) of the first enclosure (18).

5. Device according to claim 3 or 4, wherein said upstream duct (78) houses the means (76) for blowing air and is integral with the second enclosure (20), the means (76) for blowing air being connected to electrical power supply means also carried by the second enclosure (20).

6. Device according to one of the preceding claims, wherein the means (76) for blowing air comprise a fan arranged at the inlet of the air circuit.

7. Device according to one of the preceding claims, wherein thermal insulation means are arranged between the cup (58) and the bottom wall (26) of the first enclosure (18) around the opening (30) of the first enclosure (18).

8. Device according to one of claims 1 to 7, wherein the first enclosure (18) is arranged above the second enclosure (20) and the opening of the first enclosure (18) is formed in the bottom wall (26) of the first enclosure (18) and in that the opening (36) of the second enclosure (20) is formed in an upper wall (28) of the second enclosure (20).

9. Device according to claim 8, wherein the first enclosure (18) is removably mounted on the second enclosure (20).

10. Device according to one of the preceding claims, wherein the means (44) for measuring the temperature comprise a temperature sensor carried by an inner face of the second enclosure (20) and in the vicinity of the opening (36) of the second enclosure (20).

11. Device according to one of the preceding claims, wherein a plate (50) for supporting tubes (52) intended to contain biological samples is arranged inside the chamber of the second enclosure (20), with means of driving the plate (50) in oscillating movement around a centre of rotation also being provided.

12. Device according to one of the preceding claims, wherein the chamber (34) of the second enclosure (20) is fluidically connected to the outside air.

13. Method for implementing the device according to one of the preceding claims, comprising the following steps:
- Filling the inner chamber (32) of the first enclosure (18) with a material (57) capable of producing cold by sublimation under normal temperature and pressure conditions, such as carbon dioxide in solid form, the step of filling the inner chamber (32) comprising the mounting of a cup (58) for receiving said material (57) inside the inner chamber (32) of the first enclosure (18), the cup comprising a lower wall (26) including a plurality of orifices (64), and being positioned at a distance from a bottom wall (26) of the first enclosure (18) wherein the opening (30) of the first enclosure (18) is formed;
- Determining a target temperature to be reached for the chamber (34) of the second enclosure (20),
- Turning on the device in such a way as to maintain the temperature of the chamber (34) of the second enclosure (20) at the target temperature by controlling the air flow that supplies the chamber (32) of the first enclosure (18).
